# EUROPÄISCHE PATENTSCHRIFT

(11) **EP 3 933 215 B1**
(45) Veröffentlichungstag und Bekanntmachung des Hinweises auf die Patenterteilung: **03.04.2024**
(21) Anmeldenummer: 21180036.2
(22) Anmeldetag: 17.06.2021
(51) Int. Cl.: F16B 5/06, B23Q 17/24, F16B 21/07, F21S 8/00, F21V 21/02

(54) **AUFBAULEUCHTE UND/ODER -KAMERA UND AUFBAULEUCHTENBEFESTIGUNGSSYSTEM**
ATTACHMENT LIGHT AND / OR CAMERA AND ATTACHMENT LIGHT FIXING SYSTEM
LUMINAIRE ET/OU CAMÉRA MONTÉE EN SURFACE ET SYSTÈME DE FIXATION EN SURFACE

(30) Priorität: 29.06.2020 DE 102020117064
(43) Veröffentlichungstag der Anmeldung: 05.01.2022
(73) Patentinhaber: Herbert Waldmann GmbH & Co. KG, 78056 Villingen-Schwenningen (DE)
(72) Erfinder: Eberhardt, Marcus, 78554 Aixheim (DE)
(74) Vertreter: Westphal, Mussgnug & Partner Patentanwälte mbB

(56) Entgegenhaltungen:
- EP-A1- 2 226 436
- CN-B- 106 312 641
- FR-A- 1 402 072
- US-A- 3 916 756
- US-A1- 2009 095 862

## Beschreibung

Die vorliegende Erfindung betrifft eine Aufbauleuchte und/oder -kamera zur Anordnung auf einer Wandung, insbesondere auf einer Wandung in einer Prozesskammer einer Maschine, mit den Merkmalen des Patentanspruchs 1 sowie ein Aufbauleuchtenbefestigungssystem mit den Merkmalen des Patentanspruchs 10.

Aufbauleuchten und/oder -kameras sind aus dem Stand der Technik in unterschiedlichen Ausgestaltungen - auch synonym als Anbauleuchte und/oder -kamera - vorbekannt. Gattungsgemäße Aufbauleuchten und/oder -kameras werden im Stand der Technik beispielsweise verwendet, um einen Innenraum einer Maschine zu beleuchten, um während eines Prozesses in einer Prozesskammer der Maschine beobachten zu können. Die Anforderungen an derartige Aufbauleuchten und/oder -kameras sind hoch, da diese einerseits eine hohe Leistungsdichte aufweisen sollen und andererseits den Bedingungen in der Prozesskammer der Maschine standhalten müssen. Die Beobachtung des Herstellungsprozesses innerhalb der Maschine kann dabei direkt durch einen optischen Zugang in der Wandung der Maschine erfolgen oder unmittelbar über eine Kamera, welche entweder analog oder digital das Geschehen innerhalb der Maschine erfasst.

Derartige Aufbauleuchten und/oder -kameras haben sich in der Vergangenheit bewährt, jedoch hat sich als Nachteil herausgestellt, dass die verwendeten Befestigungsmittel der Aufbauleuchten und/oder -kameras eine aufwändige Montage und Demontage zur Wartung erfordern und auch, dass die verwendeten Befestigungsmittel für die Aufbauleuchte und/oder -kamera zu Schmutzansammlungen führen können. So können beispielsweise Schraubenverbindungen über die Zeit so stark verschmutzen, dass eine spätere Demontage nicht mehr möglich ist. Auch können Vibrationen in der Maschine ein Lösen bzw. Lockern der Schrauben verursachen. Auch stehen Schraubverbindungen einem Einsatz in der Lebensmittelbranche entgegen, da Schraubenverbindungen zu viele Spalten und Taschen für eine Ansammlung von Keimen bieten.

Weiteren Stand der Technik bilden die US 2009 095 862 A1, US 3 916 756 A, EP 2 226 436 A1, CN 106 312 641 B und FR 1 402 072 A.

Hier setzt die vorliegende Erfindung an.

Der vorliegenden Erfindung liegt die Aufgabe zugrunde, die aus dem Stand der Technik bekannten Aufbauleuchten und/oder -kameras zur Anordnung auf einer Wandung, insbesondere einer Innenwandung in einer Prozesskammer einer Maschine, in zweckmäßigerweise zu verbessern und die aus dem Stand der Technik bekannten Nachteile zu beseitigen. Die Aufbauleuchte und/oder - kamera soll werkzeugfrei in dem Innenraum einer Maschine befestigbar sein und durch Befestigungsmittel auch bei auftretenden Vibrationen und Erschütterungen sicher gehalten werden.

Diese Aufgaben werden durch eine Aufbauleuchte und/oder Aufbaukamera zur Anordnung auf einer Wandung, insbesondere auf einer Wandung in einer Prozesskammer einer Maschine, mit den Merkmalen des Patentanspruchs 1sowie durch ein Aufbauleuchtenbefestigungssystem und/oder Aufbaukamerabefestigungssystem mit den Merkmalen des Patentanspruchs 10 gelöst.

Weitere vorteilhafte Ausgestaltungen der vorliegenden Erfindung werden in den Unteransprüchen angegeben.

Die erfindungsgemäße Aufbauleuchte und/oder Aufbaukamera mit den Merkmalen des Patentanspruchs 1 zur Anordnung auf einer Wandung, insbesondere auf einer Innenwandung in einer Prozesskammer einer Maschine, weist ein Gehäuse mit einem Frontseitenbereich, einem Rückseitenbereich und Seitenwänden sowie mindestens ein Leuchtmittel und/oder mindestens eine Kamera auf, wobei im Rückseitenbereich mindestens eine Ausnehmung vorgesehen ist, in der mindestens ein Befestigungsmittel angeordnet ist und wobei das Befestigungsmittel in der Ausnehmung eine zum Rückseitenbereich abgeschrägte Falle bildet. Die Falle ist konfiguriert, beim Einsetzen eines Verbindungsstifts eine elastische Ausweichbewegung vorzunehmen und zu einer Verbindung zwischen dem Verbindungsstift und der Aufbauleuchten nach Art eines Schnappers in den Verbindungsstift einzurasten, wobei die Verbindung zwischen der Aufbauleuchte und dem Verbindungsstift eine lösliche Verbindung ist, welche vorzugsweise werkzeugfrei getrennt werden kann.

Die Erfindung beruht auf der Idee, dass die Aufbauleuchte und/oder -kamera werkzeugfrei an einer Wandung montiert oder demontiert werden kann, wobei lediglich vor der Montage ein Verbindungsstift auf oder in der Wandung angeordnet werden muss. Zu Wartungszwecken kann die Aufbauleuchte mit etwas Kraftaufwand entgegen des mindestens einen Befestigungsmittels von der Wandung gelöst werden und zur Montage erneut derart auf der Wandung positioniert werden, dass die Verbindungsstifte in die Ausnehmungen mit den Verbindungsmitteln eingreifen können. Die Befestigungsmittel bilden dabei eine einfache und stabile Verbindung, durch die die Aufbauleuchte auch bei vorkommenden Vibrationen und Erschütterungen in der Prozesskammer der Maschine sicher gehalten werden kann. Die Befestigungsmittel sind in der Aufbauleuchte und/oder Aufbaukamera komplett verdeckt und es können sich keine Späne oder Schmutzpartikel ablagern. Weiterhin ist eine besonders schnelle Montage durch ein einfaches Aufrasten der Aufbauleuchte und/oder Aufbaukamera möglich und durch das schraubenlose Design eine Verwendung in der Lebensmittelbranche möglich.

Bereits an dieser Stelle wird angemerkt, dass im Nachfolgenden vereinzelt lediglich von einer Aufbauleuchte geschrieben wird, jedoch ist in diesem Zusammenhang stets eine Aufbauleuchte, eine Aufbaukamera oder eine Kombination einer Aufbauleuchte mit einer integrierten Kamera gemeint. Die Aufbauleuchte im Zusammenhang mit dieser Erfindung ist bevorzugt eine Paneele-Leuchte, welche sich dadurch auszeichnet, dass eine den Frontseitenbereich bildende Frontseite eine ebene Fläche bildet, aus der das Licht austreten kann und/oder auf und/oder in der die Kamera angeordnet sein kann. Eine derartige Aufbauleuchte ist typischerweise quaderförmig, wobei eine Länge und eine Breite um ein Vielfaches größer sind als eine Tiefe. Die Tiefe beschreibt den Abstand zwischen der Frontseite und einer Rückseite.

Eine Weiterbildung der vorliegenden Erfindung sieht vor, dass das Befestigungsmittel einen ersten Abschnitt aufweist, der die zum Rückseitenbereich gewandte abgeschrägte Falle bildet. Der erste Abschnitt ragt folglich mit zunehmenden Abstand von dem Rückseitenbereich zunehmend in die Ausnehmung hinein. Durch eine so gebildete Schrägfläche wird das Befestigungsmittel entgegen einer Federkraft beim Einstecken des Verbindungsbolzens in die Ausnehmung beiseitegeschoben, bis dass zur Bildung eines Formschlusses eine durch die Federkraft initiierte Rückstellbewegung erfolgt und das Befestigungsmittel in eine Einkerbung des Verbindungsstifts eingreift bzw. einrastet.

Weiterhin hat es sich als vorteilhaft erwiesen, wenn das Befestigungsmittel einen zweiten Abschnitt aufweist, der eine zum Frontseitenbereich gewandte Hinterschneidung bildet.

Darüber hinaus hat es sich als vorteilhaft erwiesen, wenn sich die durch den zweiten Abschnitt des Befestigungsmittels gebildete Hinterschneidung in Richtung des Frontseitenbereichs aufweitet. Der zweite Abschnitt ist typischerweise benachbart zu dem ersten Abschnitt angeordnet, wobei der erste Abschnitt und der zweite Abschnitt V-förmig oder pfeilförmig (< oder >) angeordnet sind. Zwischen dem ersten Abschnitt und dem zweiten Abschnitt kann eine Kuppe angeordnet sein, die eingerichtet ist, in die Einkerbung des Verbindungsstifts zur Bildung des Formschlusses einzugreifen.

Während der erste Abschnitt ein Einstecken des Verbindungsstifts in die Ausnehmung erleichtert, kann der zweite Abschnitt das Lösen der formschlüssigen Verbindung erleichtern und es ermöglichen, dass beim Herausziehen des Verbindungsstifts das mindestens eine Befestigungsmittel eine Ausweichbewegung vornehmen kann, durch welche der Verbindungsstift freigegeben wird. Die Federkraft des Befestigungsmittels kann gezielt die Kraft festlegen, welche benötigt wird, um die Verbindung zwischen dem Verbindungsstift und der Aufbauleuchte zu lösen. In Analogie zu einem Türschloss ähnelt eine solche Ausgestaltung des Befestigungsmittels einem Pendeltürschloss bzw. einer Rollenfalle.

Gemäß der vorliegenden Erfindung ist vorgesehen, dass das Befestigungsmittel U-förmig mit zwei Schenkeln und einem die Schenkel verbindenden Zwischenabschnitt ausgebildet ist, und dass die zwei Schenkel die zum Rückseitenbereich abgeschrägte Falle bilden. Der jeweilige Schenkel kann folglich jeweils den ersten Abschnitt und den zweiten Abschnitt des Befestigungsmittels bilden, wobei das U-förmige Befestigungsmittel symmetrisch ausgebildet ist. Ein derart geformtes Befestigungsmittel kann aus einem einstückigen Federblech auf einfachste Weise hergestellt werden und ermöglicht es, sowohl die Haltekraft als auch die Kraft zum Lösen der Verbindung exakt vorher zu bestimmen.

Darüber hinaus hat es sich als vorteilhaft erwiesen, wenn die Schenkel des U-förmigen Befestigungsmittels zueinander gepfeilt - also >< - ausgebildet sind, wodurch der jeweilige Schenkel V-förmig ausgebildet ist und die beiden Kuppen der Schenkel auf diametralen Seiten zueinander gerichtet in die Ausnehmung ragen.

Gemäß der vorliegenden Erfindung ist das mindestens eine Befestigungsmittel in der Ausnehmung frei beweglich angeordnet, wodurch das mindestens eine Befestigungsmittel in der Ausnehmung Toleranzen ausgleichen kann. Die Positionierung des mindestens einen Verbindungsstifts auf der Wandung muss folglich nicht hochpräzise erfolgen und auch wird ein Verklemmen oder Verkannten verhindert, wenn mehr als zwei Verbindungsstifte verwendet werden, um die Aufbauleuchten auf der Wandung zu befestigen.

Die Ausnehmung weist einen Hinterschnitt auf, wobei das mindestens eine Befestigungsmittel durch den Hinterschnitt formschlüssig und bevorzugt verlustsicher in der Ausnehmung eingeschlossen ist. Die freien Enden der Schenkel bzw. des ersten Abschnittes des Befestigungsmittels ragen demnach so weit auseinander, dass der Abstand zwischen diesen größer ist, als die Öffnung der Ausnehmung in dem Rückseitenbereich.

Eine Weiterbildung der vorliegenden Erfindung sieht vor, dass in dem Gehäuse das mindestens eine Leuchtmittel vorgesehen ist, und dass auf der Frontseite eine Lichtaustrittsöffnung vorgesehen ist, durch die das von dem mindestens einen Leuchtmittel emittierte Licht aus dem Gehäuse austreten kann. Das mindestens eine Leuchtmittel kann weiter bevorzugt ein LED-Leuchtmittel sein. Weiter bevorzugt können in dem Gehäuse eine Mehrzahl von Leuchtmitteln angeordnet sein können, welche weiterhin in einem vorgegebenen Raster, vorzugsweise in einer Ebene, angeordnet sein können. Die jeweilige LED weist eine Hauptabstrahlrichtung auf, welche in Richtung der Lichtaustrittsöffnung weist.

Nach Maßgabe einer weiteren bevorzugten Ausgestaltung der vorliegenden Erfindung ist in der Lichtaustrittsöffnung eine lichtdurchlässig Platte angeordnet, die für das mindestens eine Leuchtmittel einen Optikabschnitt aufweist. Der Optikabschnitt ist vorzugsweise fluchtend zu dem jeweiligen Leuchtmittel angeordnet und konfiguriert, dass Licht möglichst homogen in den Raum bzw. die Prozesskammer der Maschine abzugeben. Der Optikabschnitt kann einer optischen Linse nachempfunden sein und konkav und/oder konvex ausgebildet sein.

Weiterhin hat es sich als vorteilhaft erwiesen, wenn das mindestens eine Leuchtmittel in einer Ebene parallel zu der lichtdurchlässigen Platte beweglich angeordnet ist, wodurch die Relativposition zwischen dem mindestens einen Leuchtmittel und dem Optikabschnitt veränderbar ist. Durch eine Veränderung der Relativposition zwischen dem mindestens einen Leuchtmittel und dem Optikabschnitt kann das von dem mindestens einen Leuchtmittel emittierte Licht durch den Optikabschnitt umgelenkt werden, wodurch die Aufbauleuchten das Licht in eine beliebige Richtung abstrahlen kann. Für den Fall, dass mehrere Leuchtmittel gemeinsam in der Ebene beweglich angeordnet sind, ist bevorzugt für jedes der Leuchtmittel ein Optikabschnitt vorgesehen.

Darüber hinaus kann es vorteilhaft sein, wenn die Kamera ganz oder teilweise in der Lichtaustrittsöffnung angeordnet ist. Bevorzugt ist die Kamera in der Lichtaustrittsöffnung in das Gehäuse eingelassen und um die Kamera herum sind Leuchtmittel angeordnet. Das Licht wird bevorzugt parallel zu der optischen Achse der Kamera abgestrahlt, wodurch der durch die Kamera beobachtete Bereich bestmöglich ausgeleuchtet ist und Schattenwürfe vermieden werden. Auch ist es möglich, dass ergänzend zu dem mindestens einem Leuchtmittel in dem Gehäuse mindestens ein weiteres Leuchtmittel in der Kamera angeordnet ist. Auch ist es möglich, dass die Kamera das mindestens eine Leuchtmittel aufweist. Weiterhin ist es bevorzugt, wenn die Kamera in mindestens eine, vorzugsweise in zwei Raumrichtungen verschwenkbar angeordnet ist.

Ein weiterer nicht gesondert beanspruchter Aspekt betrifft einen Verbindungsstift zum Herstellen einer Verbindung zwischen einer Wandung und einer Aufbauleuchte, insbesondere einer zuvor beschriebenen Aufbauleuchte. Der Verbindungsstift ist entlang einer Achse ausgebildet, und weist ein Verbindungsmittel zum Befestigen des Verbindungsstifts an der Wandung und einen Steckerabschnitt auf, wobei der Steckerabschnitt in der Achse benachbart zu dem Verbindungsabschnitt angeordnet ist. Darüber hinaus weist der Steckerabschnitt eine Einkerbung auf.

Der Verbindungsstift ist vorzugsweise ein näherungsweise rotationssymmetrischer Stab, der durch das Verbindungsmittel an der Wandung, insbesondere der Innenwandung der Maschine, befestigt werden kann. Der Verbindungsstift steht senkrecht von der Wandung ab, die vorzugsweise als ebene Platte ausgebildet ist.

Eine Weiterbildung des Verbindungsstifts sieht vor, dass die Einkerbung als umlaufende Nut um die Achse ausgebildet ist. Die Einkerbung ist bevorzugt beabstandet zu dem Verbindungsmittel und somit zwischen dem Verbindungsmittel und einem freien Ende des Steckerabschnitts angeordnet und somit derart positioniert, dass beim Einstecken des Verbindungsstifts in die Ausnehmung der Aufbauleuchte die Einkerbung vollständig in die Ausnehmung ragt.

Gemäß einer Weiterbildung des Verbindungsstifts kann das Verbindungsmittel konfiguriert sein, eine Schraubverbindung, eine Schraubklemmung, eine Rastverbindung und/oder eine Nietverbindung mit der Wandung herzustellen. Auch kann der Verbindungsstift durch eine Schweiß-, Klebe- und/oder Pressverbindung an der Wandung befestigt werden. Das Verbindungsmittel muss nicht zwangsweise den Verbindungsstift drehfest mit der Wandung verbinden, sondern es ist lediglich erforderlich, dass das Verbindungsmittel eine ausreichend hohe Haltekraft erzeugt, die vorzugsweise größer ist, als die Haltekraft des Befestigungsmittels der Aufbauleuchte in der mindestens einen Ausnehmung in dem Rückseitenbereich. Das Verbindungsmittel kann beispielsweise zur Bildung einer Nutverbindung konfiguriert sein, wobei der Verbindungsstift als Blindniete ausgebildet sein kann. Ein derartiger Verbindungsstift ist hülsenförmig ausgebildet und weist einen Nietschaft, einen Setzkopf und den Steckerabschnitt auf, wobei der Steckerabschnitt auf der von dem Nietschaft abgewandten Seite des Setzkopfes angeordnet ist.

Weiterhin hat es sich als vorteilhaft erwiesen, wenn der Steckerabschnitt an einem freien Ende kegelförmig ausgebildet ist. Das kegelförmige freie Ende des Verbindungsstifts erleichtert das Einsetzen des Steckerabschnitts in die Ausnehmung mit dem mindestens einen Befestigungsmittel der Aufbauleuchte und/oder Aufbaukamera.

Ein dritter und letzter Aspekt der vorliegenden Erfindung betrifft ein Aufbauleuchten- und/oder Aufbaukamerabefestigungssystem zum Befestigen einer Aufbauleuchte an einer Wandung mit einer Aufbauleuchte und/oder -kamera nach einem der Ansprüche 1-9, und mindestens einem Verbindungsstift, insbesondere einem zuvor beschriebenen Verbindungsstift, mit einem Verbindungsmittel, durch das der Verbindungsstift an der Wandung befestigbar ist und einem Steckerabschnitt, wobei die Aufbauleuchte in einem Rückseitenbereich mindestens eine Ausnehmung aufweist, in die der mindestens eine Verbindungsstift bzw. der Steckerabschnitt des mindestens einen Verbindungsstifts einstellbar ist, und wobei das mindestens eine Befestigungsmittel eine zum Rückseitenbereich abgeschrägte Falle bildet, die in eine Einkerbung des Steckerabschnitts zur Bildung eines Formschlusses eingreifen kann. Gemäß einer Weiterbildung des Aufbauleuchtenbefestigungssystems und/oder des Aufbaukamerabefestigungssystems kann es vorteilhaft sein, wenn das Befestigungsmittel im Formschluss eine Federkraft auf den Steckerabschnitt des Verbindungsstifts ausübt, durch die der Steckerabschnitt in die Ausnehmung gezogen wird. Durch die Federkraft wird die Aufbauleuchte fest gegen die Wandung gedrückt, wodurch ein etwaiger Spalt zwischen der Wandung und der Aufbauleuchte geschlossen wird. Insbesondere kann es vorteilhaft sein, wenn auf dem Rückseitenbereich der Aufbauleuchte eine Gummidichtung angeordnet ist, welche unter Wirkung der Federkraft den Spalt zwischen der Wandung und der Aufbauleuchte flüssigkeitsdicht verschließt.

Nachfolgend wird unter Bezugnahme auf die begleitende Zeichnung ein Ausführungsbeispiel der vorliegenden Erfindung im Detail beschrieben. Es zeigen:
- Figur 1: eine perspektivische Explosionsdarstellung eines Aufbauleuchtenbefestigungssystems, aufweisend eine Aufbauleuchte und sechs an einer Wandung befestigte Verbindungsstifte,
- Figur 2: eine Schnittdarstellung der Explosionsdarstellung gemäß Figur 1, und
- Figur 3: eine Schnittdarstellung des Aufbauleuchtenbefestigungssystems gemäß den Figuren 1 und 2, wobei die Aufbauleuchte mittels der Verbindungsstifte an der Wandung befestigt ist.

Nachfolgend werden gleiche oder funktional gleiche Bauteile in einem Ausführungsbeispiel mit gleichen Bezugszeichen gekennzeichnet. Der Übersichtlichkeit halber sind in den einzelnen Figuren nicht alle gleichen oder funktional gleichen Teile mit einer Bezugsziffer versehen.

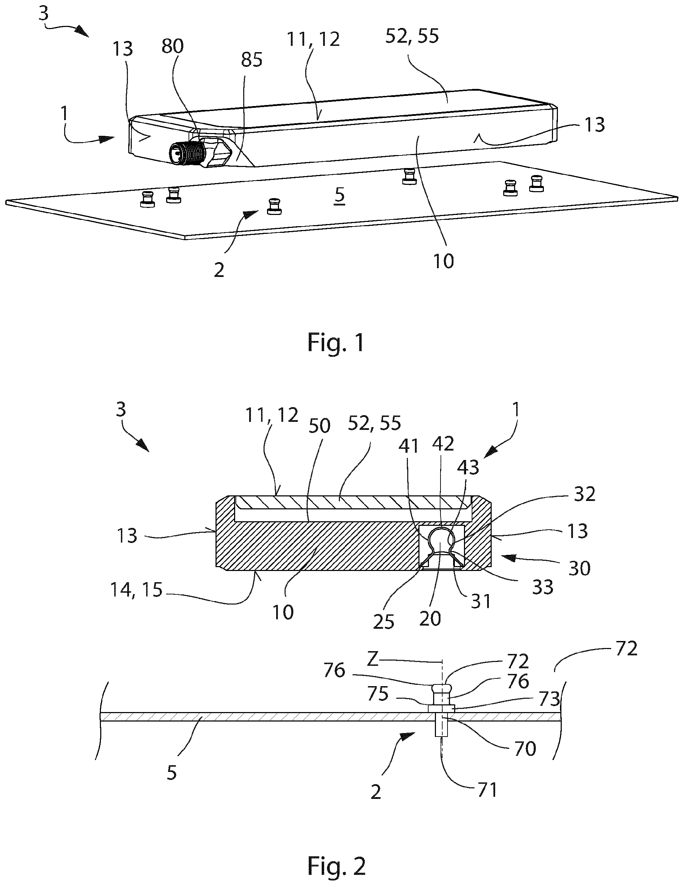

Die Explosionsdarstellung gemäß Figur 1 zeigt ein Aufbauleuchtenbefestigungssystem 3, welches eine Aufbauleuchte 1 und sechs Verbindungsstifte 2 umfasst. Das Aufbauleuchtenbefestigungssystem 3 dient einer Befestigung der Aufbauleuchte 1 auf einer Wandung 5, welche vorzugsweise als ebene Platte ausgebildet ist. Die Wandung 5 kann eine Innenwandung einer (nicht dargestellten) Maschine sein, die eine Prozesskammer, in der die Bearbeitung von Werkstücken stattfinden kann, zumindest bereichsweise einschließt. Derartige Wandungen 5 können aus einem plattenförmigen Werkstoff mit einer Wandstärke t gebildet sein, wobei der Werkstoff typischerweise ein metallischer Werkstoff ist. Die Wandung 5 weist eine erste Seite und eine der ersten Seite gegenüberliegende zweite Seite auf, wobei die erste Seite der Wandung 5 der Prozesskammer zugewandt ist.

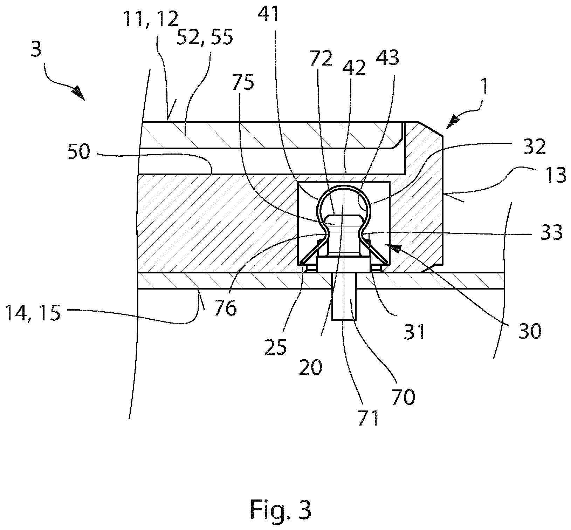

Die Aufbauleuchte 1 umfasst ein Gehäuse 10 mit einem Frontseitenbereich 12 und einem Rückseitenbereich 14, wobei der Rückseitenbereich 14 eine Anlagefläche bilden kann, die auf der Wandung 5 zur Anlage kommen kann. Der Rückseitenbereich 14 weist eine Rückseite 15 und der Frontseitenbereich 12 eine Frontseite 11 auf, wobei im montierten Zustand der Aufbauleuchte 1 gemäß Figur 3 die Frontseite 11 beabstandet zu der ersten Seite der Wandung 5 angeordnet ist und die Rückseite 15 auf der ersten Seite der Wandung 5 anliegen kann.

Das Gehäuse 10 ist vorzugsweise quaderförmig ausgebildet und kann wie dargestellt vier Seitenwände 13 aufweisen, wobei das Gehäuse 10 eine Breite B, eine Länge L und eine Tiefe H aufweist.

In dem Gehäuse 10 können ein oder mehrere Leuchtmittel 50 angeordnet sein, welche nicht detailliert dargestellt sind. In den Figuren 2 und 3 wird deren ungefähre Anordnung durch die Bezugszeichen angegeben.

Die Leuchtmittel 50 sind vorzugsweise LED-Leuchtmittel 50, die auf einer oder mehrerer Platten bevorzugt in einem Raster angeordnet sind. Ferner weist das Gehäuse 10 in dem Frontseitenbereich eine Gehäuseöffnung 52 auf, durch die das von den Leuchtmitteln 50 emittierte Licht abgestrahlt werden kann. Die Gehäuseöffnung 52 kann durch eine lichtdurchlässige Platte 55 verschlossen sein.

An dieser Stelle sei angemerkt, das aus Gründen der Vereinfachung in den Ausführungsbeispielen lediglich eine Aufbauleuchte 1 mit Leuchtmitteln 50 detailliert beschrieben wird. Zusätzlich oder auch anstelle des mindestens einen Leuchtmittels 50 kann eine (nicht dargestellte) Kamera 60 vorgesehen sein, die im Frontseitenbereich 12, vorzugsweise innerhalb der Lichtaustrittsöffnung 52, angeordnet sein kann.

Zum Befestigen der Aufbauleuchte 1 auf der Wandung 5 sind in dem Rückseitenbereich 14 mehrere Befestigungsmittel 50 vorgesehen, in innerhalb einer von der Rückseite 15 durch eine Öffnung 21 zugänglichen Ausnehmung 20 angeordnet sind.

Die Ausnehmung 20 erstreckt sich von der Rückseite 15 in dem Rückseitenbereich 14 in Richtung des Frontseitenbereichs 12 und kann als ein zylindrisches Sackloch oder als eine quaderförmige Tasche ausgebildet sein. Die Ausnehmung 20 weist weiterhin einen Hinterschnitt 25 auf. Die Öffnung 21 weist eine Weite W1 auf und im Bereich des Hinterschnitts 25 weist die Ausnehmung 20 eine Weite W2 auf, wobei die Weite W1 > W2 ist.

In der Ausnehmung 20 ist das Befestigungsmittel 30 durch den Hinterschnitt 25 formschlüssig eingeschlossen und kann in der Ausnehmung 20 frei beweglich angeordnet sein um Toleranzen auszugleichen.

Das Befestigungsmittel 30 ist aus einem biegeelastischen Werkstoff vorzugsweise einstückig hergestellt und ist näherungsweise U-förmig ausgebildet. Das Befestigungsmittel 30 weist einen ersten Schenkel 41 und einen zweiten Schenkel 43 sowie einen Zwischenabschnitt 42 auf, der den ersten Schenkel 41 mit dem zweiten Schenkel 43 verbindet. Das Befestigungsmittel 30 kann spiegel- bzw. liniensymmetrisch ausgebildet sein, wobei der jeweilige Schenkel 41 ,43 einen ersten Abschnitt 31 und einen zweiten Abschnitt 32 aufweisen kann. Der erste Abschnitt 31 bildet eine in Richtung des Frontseitenbereichs 12 abgeschrägte Falle auf, während dessen der zweite Abschnitt 32 eine Hinterschneidung bildet. Zwischen dem ersten Abschnitt 31 und dem zweiten Abschnitt 32 ist eine Kuppe 33 ausgebildet. Der erste Schenkel 41 und der zweite Schenkel 43 mit den beiden Abschnitten 31, 32 sind somit zueinander gepfeilt ausgerichtet. Die freien Enden der Schenkel 41, 43 stehen trichterförmig auseinander, wobei vorzugsweise die beiden freien Enden in einem Abstand A angeordnet sind, der größer ist, als die Weite W1 der Öffnung 21 und kleiner oder gleich der Weite W2 des Hinterschnitts 25 ist.

Der Verbindungsstift 2 weist, wie insbesondere den Figuren 2 und 3 zu entnehmen ist, einen Verbindungsabschnitt 70 und einen Steckerabschnitt 75 auf, die in einer Achse Z benachbart angeordnet sind, und erstreckt sich zwischen einem ersten Endbereich 71 und einem zweiten Endbereich 72, der ein freies Ende aufweist. Der Verbindungabschnitt 70 ist eingerichtet, eine Verbindung mit der Wandung 5 herzustellen, und der Steckerabschnitt 75 ist konfiguriert, in die Ausnehmung 20 der Aufbauleuchte 1 eingesteckt zu werden und eine form- und/oder kraftschlüssige Verbindung mit dem Befestigungsmittel 30 in der Ausnehmung 20 einzugehen. Der Verbindungabschnitt 70 weist einen Kopf 73 auf, der auf der Wandung 5 anliegt und eine Eintauchtiefe in die Wandung 5 des Verbindungsstifts 2 vorgibt.

Der Verbindungsabschnitt 70 ist in dem ersten Endbereich 71 ausgebildet und kann ein (nicht dargestelltes) Gewinde oder Rastmittel aufweisen, durch die der Verbindungsstift 2 an der Wandung 5 in einer Montageöffnung 6 befestigt werden kann. Der Verbindungsabschnitt 70 kann eine drehfeste Verbindung mit der Wandung 5 herstellen, jedoch ist eine drehfeste Verbindung zwischen dem Verbindungsstift 2 und der Wandung 5 nicht zwangsweise notwendig.

Der Verbindungsstift 2 kann als Blindniete hülsenförmig ausgebildet sein und einen Nietschaft und einen Setzkopf aufweisen, wobei der Nietschaft durch einen den Verbindungsstift 2 durchgreifenden Nietdorn derart verformt werden kann, dass die Wandung 5 zum zwischen einem plastischen Verformungen Bereich des Nietschaftes und dem Setzkopf, der den Kopf 73 bildet, festgelegt wird.

Der Steckerabschnitt 75 ist in dem zweiten Endbereich 72 angeordnet und steht von der Wandung 5, vorzugsweise senkrecht zu der Wandung 5, ab und weist ferner eine Einkerbung 76 auf, die als umlaufende Nut um die Achse Z ausgebildet ist. Die Einkerbung 76 ist zwischen dem freien Ende des zweiten Endbereichs 72 und dem Verbindungsabschnitt 70 angeordnet.

Weiterhin kann das freie Ende des Steckerabschnitts 75 in dem zweiten Endbereich 72 kegelförmig oder als eine Verrundung ausgebildet sein.

Beim Einsetzen des Verbindungsstiftes 2 bzw. des Steckerabschnitts 75 in die Ausnehmung 20 der Aufbauleuchte 1 wird die zum Rückseitenbereich abgeschrägte Falle, die durch das Befestigungsmittel 30 gebildet ist in eine Ausweichbewegung gezwungen, bis das Befestigungsmittel 30 in die Einkerbung 76 einrasten kann.

Beim Einsetzen des Steckerabschnitts 75 zwingt das freie Ende des zweiten Endbereichs 72 den die zum Rückseitenbereich 14 abgeschrägte Falle bildenden ersten Abschnitt 31 in eine elastische Ausweichbewegung, wodurch die beiden Schenkel 41, 43 auseinandergespreizt werden und das freie Ende des zweiten Endbereichs 72 kann in die durch den zweiten Abschnitt 32 der Schenkel 41, 43 gebildete Hinterschneidung eindringen. Sobald die Kuppe 33 in die Einkerbung 76 des Steckerabschnitts 75 eingreift, werden die Schenkel 41, 42 zurückgedrängt und die Kuppen 33 der beiden Schenkel 41, 43 greifen auf diametralen Seiten in die Einkerbung 76 ein. Durch die Ausgestaltung des zweiten Abschnitts 32 wird der Steckerabschnitt 75 in Richtung des Frontseitenbereichs 12 gezogen, wodurch die Aufbauleuchte 1 gegen die Wandung 5 gedrückt wird.

Um die Aufbauleuchte 1 von der Wandung 5 zu lösen, muss eine Zugkraft auf die Aufbauleuchte 1 aufgebracht werden, wodurch das Befestigungsmittel 30 aus dem Formschluss mit der Einkerbung 76 ausgedrückt wird und die Aufbauleuchte 1 freigegeben wird.

Weiterhin kann auf der Rückseite 15 eine Dichtung angeordnet sein, durch die ein etwaiger verbleibender Spalt zwischen der Wandung 5 und der Aufbauleuchte 1 abgedichtet wird. Zur Demontage kann weiterhin im Rückseitenbereich 14 ein Demontageschlitz am Gehäuse 10 ausgebildet sein, in den beispielsweise ein Werkzeug zur Demontage der Aufbauleuchte 1 einsetzbar ist. Durch eine Hebelbewegung kann der Formschluss zwischen dem Befestigungsmittel 30 und dem Verbindungsstift 2 gelöst werden.

Weiterhin kann die Aufbauleuchte 1, wie in Figur 1 gezeigt ist, eine abgeschrägte Fläche 85 aufweisen, die zwei Seitenwände 13 mit der Rückseite 15 oder der Frontseite 11 verbindet, wobei die abgeschrägte Fläche 85 in einem Winkel von 45° zu der Frontseite 11 oder der Rückseite 15 abgewinkelt ist.

Auf der abgeschrägten Fläche kann ein elektrischer Anschluss 80 vorgesehen sein, wobei der elektrische Anschluss 80 vorzugsweise um ± 180° verdrehbar ist. Der elektrische Anschluss 80 kann Rastmittel aufweisen, durch die die Ausrichtung des verschwenkbaren Anschlusses 80 festgestellt werden kann.

### Bezugszeichenliste

- 1: Aufbauleuchte
- 2: Verbindungsstift
- 3: Leuchten- und/oder Kamerabefestigungssystem
- 5: Wandung
- 6: Montageöffnung
- 10: Gehäuse
- 11: Frontseite
- 12: Frontseitenbereich
- 13: Seitenwände
- 14: Rückseitenbereich
- 15: Rückseite
- 20: Ausnehmung
- 21: Öffnung
- 25: Hinterschnitt
- 30: Befestigungsmittel
- 31: erster Abschnitt
- 32: zweiter Abschnitt
- 33: Kuppe
- 35: Hinterschneidung
- 41: erster Schenkel
- 42: Zwischenabschnitt
- 43: zweiter Schenkel
- 50: Leuchtmittel
- 52: Lichtaustrittsöffnung
- 55: Platte
- 58: Optikabschnitt
- 60: Kamera
- 70: Verbindungsabschnitt
- 71: erster Endbereich
- 72: zweiter Endbereich
- 73: Kopf
- 75: Steckerabschnitt
- 76: Einkerbung
- 80: Anschluss
- 85: Fläche

## Patentansprüche

1. Aufbauleuchte und/oder -kamera (1) zur Anordnung auf einer Wandung (5), insbesondere einer Innenwandung einer Maschine, aufweisend:
- ein Gehäuse (10) mit einem Frontseitenbereich (12), einem Rückseitenbereich (14) und Seitenwänden (13),
- mindestens ein Leuchtmittel (50) und/oder mindestens eine Kamera (60),
- wobei im Rückseitenbereich (14) mindestens eine Ausnehmung (20) vorgesehen ist, in der mindestens ein Befestigungsmittel (30) angeordnet ist,
- wobei das Befestigungsmittel (30) in der Ausnehmung (20) eine zum Rückseitenbereich (14) abgeschrägte Falle bildet,
- **gekennzeichnet dadurch, dass** das Befestigungsmittel (30) ein einstückiges Federblech ist und U-förmig mit zwei Schenkeln (41, 43) und einem die Schenkel (41, 43) verbinden Zwischenabschnitt (42) ausgebildet ist, und dass die Schenkel (41, 43) die zum Rückseitenbereich (14) abgeschrägte Falle bilden,
- wobei die Ausnehmung (20) einen Hinterschnitt (25) aufweist, und dass durch den Hinterschnitt (25) das Befestigungsmittel (30) formschlüssig in der Ausnehmung (20) eingeschlossen ist, und
- wobei das Befestigungsmittel (30) in der Ausnehmung (20) freibeweglich ist.

2. Aufbauleuchte und/oder -kamera (1) nach Anspruch 1,
**dadurch gekennzeichnet, dass** das Befestigungsmittel (30) einen ersten Abschnitt (31) aufweist, der die zum Rückseitenbereich (14) gewandte abgeschrägte Falle bildet.

3. Aufbauleuchte und/oder -kamera (1) nach einem der vorgenannten Ansprüche,
**dadurch gekennzeichnet, dass** das Befestigungsmittel (30) einen zweiten Abschnitt (32) aufweist, der eine zum Frontseitenbereich (12) gewandte Hinterschneidung (35) bildet.

4. Aufbauleuchte und/oder -kamera (1) nach Anspruch 3,
**dadurch gekennzeichnet, dass** sich die durch den zweiten Abschnitt (32) gebildete Hinterschneidung (35) in Richtung des Frontseitenbereichs (14) aufweitet.

5. Aufbauleuchte und/oder -kamera (1) nach einem der vorgenannten Ansprüche,
**dadurch gekennzeichnet, dass** die Schenkel (41, 43) zueinander gepfeilt ausgebildet sind.

6. Aufbauleuchte und/oder -kamera (1) nach einem der vorgenannten Ansprüche,
**dadurch gekennzeichnet, dass** in dem Gehäuse (10) das mindestens eine Leuchtmittel (50) vorgesehen ist, und dass auf einer Frontseite (11) eine Lichtaustrittsöffnung (52) vorgesehen ist, aus der das von dem Leuchtmittel (50) emittierte Licht aus dem Gehäuse (10) austreten kann.

7. Aufbauleuchte und/oder -kamera (1) nach einem der vorgenannten Ansprüche,
**dadurch gekennzeichnet, dass** in der Lichtaustrittsöffnung (52) eine lichtdurchlässige Platte (55) angeordnet ist, die für das mindestens eine Leuchtmittel (50) einen Optikabschnitt (58) aufweist.

8. Aufbauleuchte und/oder -kamera (1) nach einem der vorgenannten Ansprüche,
**dadurch gekennzeichnet, dass** mehrere Leuchtmittel (50) in einem Raster vorgesehen sind, und/oder dass die Leuchtmittel (50) in einer Ebene beweglich sind.

9. Aufbauleuchte und/oder -kamera (1) nach einem der vorgenannten Ansprüche,
**dadurch gekennzeichnet, dass** die Kamera (60) in der Lichtaustrittsöffnung (52) angeordnet ist.

10. Aufbauleuchten- und/oder Aufbaukamerabefestigungssystem (3) zum Befestigen einer Aufbauleuchte und/oder -kamera (1) an einer Wandung (5), aufweisend
- die Aufbauleuchte und/oder -kamera (1) nach einem der Ansprüche 1 bis 9, und
- mindestens einen Verbindungsstift (2) mit einem Verbindungsabschnitt (70), durch die der Verbindungsstift (2) an der Wandung (5) befestigbar ist und einem Steckerabschnitt (75),
- wobei die Aufbauleuchte und/oder -kamera (1) in einem Rückseitenbereich (14) mindestens eine Ausnehmung (20) aufweist, in die der mindestens eine Verbindungsstift (2) einsteckbar ist, und
- wobei das mindestens eine Befestigungsmittel (30) eine zum Rückseitenbereich (14) abgeschrägte Falle bildet, die in eine Einkerbung (76) des Steckerabschnitts (75) zur Bildung eines Formschlusses eingreifen kann.

11. Aufbauleuchten- und/oder Aufbaukamerabefestigungssystem (3) nach Anspruch 10,
**dadurch gekennzeichnet, dass** das Befestigungsmittel (30) im Formschluss eine Federkraft auf den Steckerabschnitt (75) ausübt, durch die der Steckerabschnitt (75) in die Ausnehmung (20) gezogen wird.

12. Aufbauleuchten- und/oder Aufbaukamerabefestigungssystem (3) nach Anspruch 10 oder 11,
der Verbindungsabschnitt (70) konfiguriert ist, eine Schraubverbindung, eine Schraubklemmung oder eine Nietverbindung mit der Wandung (5) herzustellen.

13. Aufbauleuchten- und/oder Aufbaukamerabefestigungssystem (3) nach einem der Ansprüche 10 bis 12,
**dadurch gekennzeichnet, dass** die Einkerbung (76) als umlaufende Radialnut um die Achse (Z) ausgebildet ist.

14. Aufbauleuchten- und/oder Aufbaukamerabefestigungssystem (3) nach einem der Ansprüche 10 bis 13
**dadurch gekennzeichnet, dass** der Steckerabschnitt (75) in einem Endbereich (72) kegelförmig ausgebildet ist.

## Claims

1. Surface mounted luminaire and/or camera (1) for arrangement on a walling (5), in particular on the inner walling of a machine, comprising:
- a housing (10), having a front side region (12), a rear side region (14), and side walls (13),
- at least one luminous element (50) and/or at least one camera (60),
- wherein, in the rear side region (14), at least one groove (20) is provided in which at least one attachment means (30) is arranged,
- wherein the attachment means (30) forms a catch which is chamfered toward the rear side region (14),
**characterized in that**
- the attachment means (30) is an integral spring metal sheet and is implemented in a U-shape, with two legs (41, 43) and an intermediate section (42) which connects the legs (41, 43), and **in that** the legs (41, 43) form the catch which is chamfered toward the rear side region (14),
- wherein the groove (20) comprises an undercut (25), and **in that**, by means of the undercut (25), the attachment means (30) is enclosed in the groove (20) in a form-fitting manner, and
- wherein the attachment means (30) is freely moveable within the groove (20).

2. Surface mounted luminaire and/or camera (1) in accordance with claim 1,
**characterized in that**
the attachment means (30) comprises a first section (31) which forms the catch chamfered toward the rear side region (14).

3. Surface mounted luminaire and/or camera (1) in accordance with either of the preceding claims,
**characterized in that**
the attachment means (30) comprise a second section (32) which forms an undercut (35) facing the front side region (12).

4. Surface mounted luminaire and/or camera (1) in accordance with claim 3,
**characterized in that**
the undercut (35) formed by the second section (32) widens in the direction of the rear side region (14).

5. Surface mounted luminaire and/or camera (1) in accordance with any of the preceding claims,
**characterized in that**
the legs (41, 43) are implemented swept toward each other.

6. Surface mounted luminaire and/or camera (1) in accordance with any of the preceding claims,
**characterized in that**
the at least one luminous element (50) is provided in the housing (10), and **in that**, on a front side (11), a light emission aperture (52) is provided, through which the light emitted by the luminous element (50) can exit the housing (10).

7. Surface mounted luminaire and/or camera (1) in accordance with any of the preceding claims,
**characterized in that**,
in the light emission aperture (52), a transparent plate (55) is arranged, which comprises an optical section (58) for the at least one luminous element (50).

8. Surface mounted luminaire and/or camera (1) in accordance with any of the preceding claims,
**characterized in that**
numerous luminous elements (50) are provided in a grid, and/or **in that** the luminous elements (50) are moveable in a plane.

9. Surface mounted luminaire and/or camera (1) in accordance with any of the preceding claims,
**characterized in that**
the camera (60) is arranged in the light emission aperture (52).

10. Surface mounted luminaire and/or surface mounted camera attachment system (3) for attaching a surface mounted luminaire and/or camera (1) to a walling (5), comprising
- the surface mounted luminaire and/or camera (1) in accordance with any of claims 1 to 9, and
- at least one connection pin (2), having a connection section (70), by means of which the connection pin (2) can be attached to the walling (5), and having a plug section (75),
- wherein the surface mounted luminaire and/or camera (1) comprises, in a rear side region (14), at least one opening (20), into which that at least one connection pin (2) can be inserted, and
- wherein the at least one attachment means (30) forms a catch which is chamfered toward the rear side region (14) and which can engage with an indentation (76) of the plug section (75) in order to form a form-fitting connection.

11. Surface mounted luminaire and/or surface mounted camera attachment system (3) in accordance with claim 10,
**characterized in that**
the attachment means (30), in the form-fitting connection, exerts an elastic force on the plug section (75), by means of which the plug section (75) is pulled into the opening (20).

12. Surface mounted luminaire and/or surface mounted camera attachment system (3) in accordance with claim 10 or 11,
**characterized in that**
the connection section (70) is configured to produce a screw connection, a screw clamp or a rivet connection to the walling (5).

13. Surface mounted luminaire and/or surface mounted camera attachment system (3) in accordance with any of claims 10 to 12,
**characterized in that**
the indentation (76) is implemented as a circumferential radial groove around the axis (Z).

14. Surface mounted luminaire and/or surface mounted camera attachment system (3) in accordance with any of claims 10 to 13,
**characterized in that**
the plug section (75) is implemented in an end region (72) in a conical shape.

## Revendications

1. Luminaire et/ou caméra (1) monté en surface sur une paroi (5), notamment une paroi intérieure d'une machine comprenant :
- un boîtier (10) avec une zone de face (12), une zone de dos (14) et des parois latérales (13),
- au moins un moyen lumineux (50) et/ou une caméra (60),
- le dos (14) ayant au moins un évidement (20) recevant au moins un moyen de fixation (30),
- le moyen de fixation (30) dans l'évidement (20) formant une retenue inclinée par rapport au dos (14),
**caractérisé en ce que**
le moyen de fixation (30) est une tôle élastique en une seule pièce en forme de U avec deux branches (41, 43) et un segment intermédiaire (42) reliant les branches (41, 43), et
les branches (41, 43) forment une retenue inclinée par rapport à la zone de dos (14),
- l'évidement (20) a une contredépouille (25) et par la contredépouille (25) le moyen de fixation (30) est engagé par une liaison par la forme dans l'évidement (20), et
- le moyen de fixation (30) est libre en mouvement dans l'évidement (20).

2. Luminaire et/ou caméra (1) selon la revendication 1,
**caractérisé en ce que**
le moyen de fixation (30) a au moins un segment (31) qui forme la retenue inclinée, tournée vers la zone de dos (14).

3. Luminaire et/ou caméra (1) selon l'une des revendications précédentes,
**caractérisé en ce que**
le moyen de fixation (30) a un second segment (32) qui forme une contredépouille (35) orientée vers la zone de face (12).

4. Luminaire et/ou caméra (1) selon la revendication 3,
**caractérisé en ce que**
la contredépouille (35) formée par le second segment (32) va en s'élargissant en direction de la zone de face (12).

5. Luminaire et/ou caméra (1) selon l'une des revendications précédentes,
**caractérisé en ce que**
les branches (41, 43) sont inclinées l'une vers l'autre.

6. Luminaire et/ou caméra (1) selon l'une des revendications précédentes,
**caractérisé en ce que**
le moyen lumineux (50) est dans le boîtier (10), et
la face (11) a une ouverture de sortie de lumière (52) par laquelle la lumière du moyen lumineux (50) peut sortir du boîtier (10).

7. Luminaire et/ou caméra (1) selon l'une des revendications précédentes,
**caractérisé en ce que**
l'ouverture de sortie de lumière (52) est munie d'une plaque transparente (55) qui a un segment optique (58) pour le moyen lumineux (50).

8. Luminaire et/ou caméra (1) selon l'une des revendications précédentes,
**caractérisé en ce que**
plusieurs moyens lumineux (50) sont prévus selon une grille et/ou les moyens lumineux (50) sont mobiles dans un plan.

9. Luminaire et/ou caméra (1) selon l'une des revendications précédentes,
**caractérisé en ce que**
la caméra (60) est logée dans l'ouverture de sortie de lumière (52).

10. Système de fixation (3) d'un luminaire et/ou d'une caméra (1) montée en surface, sur une paroi (5),
comprenant :
- un luminaire et/ou une caméra (1) monté en surface selon l'une des revendications 1 à 9, et
- au moins une broche de liaison (2) avec un segment de liaison (70) par lequel la broche de liaison (2) se fixe dans la paroi (5) et un segment de connecteur (75),
- le luminaire et/ou la caméra (1) monté en surface ont, dans la zone du dos (14), au moins un évidement (20) dans lequel s'engage une broche de liaison (2),
- le moyen de fixation (30) forme une retenue inclinée vers la zone de dos (14) et qui peut venir dans une encoche (76) du segment de connecteur (75) pour réaliser une liaison par la forme.

11. Système de fixation (3) d'un luminaire et/ou d'une caméra montée en surface selon la revendication 10,
**caractérisé en ce que**
le moyen de fixation (30) réalise une liaison par la forme avec une force de ressort sur le segment de connecteur (75) qui tire le segment de connecteur (75) dans l'évidement (20).

12. Système de fixation (3) d'un luminaire et/ou d'une caméra montée en surface selon l'une des revendications 10 ou 11,
**caractérisé en ce que**
le segment de liaison (70) est configuré pour réaliser une liaison vissée, un serrage par vis ou une liaison par rivet avec la paroi (5).

13. Système de fixation (3) d'un luminaire et/ou d'une caméra montée en surface selon l'une des revendications 10 à 12,
**caractérisé en ce que**
l'encoche (76) est sous la forme d'une rainure radiale périphérique autour de l'axe (Z).

14. Système de fixation (3) d'un luminaire et/ou d'une caméra montée en surface selon l'une des revendications 10 à 13,
**caractérisé en ce que**
le segment de connecteur (75) a une zone d'extrémité (72) de forme conique.
